(19) **Europäisches Patentamt**

**European Patent Office**

**Office européen des brevets**

(11) **EP 0 796 463 B1**

(12) **EUROPEAN PATENT SPECIFICATION**

(45) Date of publication and mention
of the grant of the patent:
**13.06.2001 Bulletin 2001/24**

(51) Int Cl.$^7$: **G06F 9/46**

(86) International application number:
**PCT/SE95/01484**

(21) Application number: **95941311.3**

(22) Date of filing: **08.12.1995**

(87) International publication number:
**WO 96/18149 (13.06.1996 Gazette 1996/27)**

(54) **CONFIGURATION MECHANISM**

MECHANISMUS FÜR EINE KONFIGURIERUNG

MECANISME DE CONFIGURATION

(84) Designated Contracting States:
**AT BE CH DE DK ES FR GB GR IE IT LI NL SE**

(30) Priority: **09.12.1994 SE 9404295**

(43) Date of publication of application:
**24.09.1997 Bulletin 1997/39**

(73) Proprietor: **TELEFONAKTIEBOLAGET L M
ERICSSON (publ)
126 25 Stockholm (SE)**

(72) Inventors:
• **HOLTE-ROST, Anna, Naemi, Ingeborg
S-124 72 Bandhagen (SE)**

• **ANDERSSON, Sofia, Birgitta
S-163 54 Spanga (SE)**
• **LARRUY, Ramon, Alexander
S-741 31 Knivsta (SE)**

(74) Representative: **Svanfeldt, Hans-Ake et al
DR. LUDWIG BRANN PATENTBYRA AB
P.O. Box 1344
751 43 Uppsala (SE)**

(56) References cited:
**EP-A- 0 366 344          EP-A- 0 645 702
US-A- 5 165 018**

Printed by Jouve, 75001 PARIS (FR)

## Description

## Definitions

In the context of this application, the following terms will have the meanings defined below:

"Resource" means something that may be allocated in a distributes system and which one wants to have access to, and therefore must be addressable. Each Resource or Resource Representation has an identifier associated with it, said identifier being common to all objects belonging to a Distribution Unit (see definition in the Detailed Description). It may be subdivided in "Hardware Resources" (such as communication channels, Line Interface Circuits (LIC)), and "Software Resources" (such as subscriber data). Hardware Resources commonly have a software representation, which is in fact what one wants to have access to. Such software representations then become a Software Resource, and constitutes one of the objects that may be handled under the concept of Distribution Units. Thus, for the purpose of this application a "Resource" is a Software Resource.

"Distribution Unit" (D.U.) means a single resource or a group of resources. From a Resource in a D.U. there is a mapping which makes it possible to find the identity of the D.U. In other than telecommunications systems a Distribution Unit might encompass any object in any data base (information about cars, health status of people, etc.), or process allocated objects representing hardware. A "Distribution Unit" in a telecommunications system may e.g. be all subscribers having the same two last digits in their telephone numbers. This creates a total of 100 Distribution Units, although of course each Distribution Unit then represents very many actual subscribers. In a generalized case a Distribution Unit may encompass almost anything, and exactly what it encompasses is dependent on the application in question. D.U.'s will be defined during system design, and the information about a D.U., i.e. exactly what it encompasses, will be loaded into the system at initial start. D.U.'s may also be added in runtime during operation of the system.

As defined above a Distribution Unit may encompass a number of resources, and what the Distribution Unit actually comprises is dependent on the application in question. Thus it can be almost anything from groups of objects in data bases to process allocated objects representing hardware. In a telecommunications system a very common object making up a Distribution Unit is a group of data representing individual subscribers connected to the telecommunications system.

Each Distribution Unit has a unique identity, that can be used by an application subfunction addressing the Distribution Unit. This identity is composed of one part identifying the application subfunction with which the Distribution Unit in question is associated, and one part identifying the Distribution Unit within this application subfunction.

This may be exemplified with the application being ISDN and the application subfunction being "call access". If the Distribution Unit then is the 12th Distribution Unit within this application subfunction the identity would be ISDN, "call access" 12.

In the case of subscribers in a telecommunication system, the common identifier for objects of an Distribution Unit may be the last two digits of a telephone number, which would create 100 Distribution Units.

Furthermore, each Distribution Unit can be independently allocated to a processor.

The number of Distribution Units defined by an application determines the maximum number of processors that this application might be distributed to. An advantage of the use of D.U.'s as contemplated in the invention, is that vast amounts of data will become easier to handle, simply because there will be fewer units to handle. Also loss of processors will be handled by the system itself without operator engagement.

Another advantage is an improved addressing capacity, because the length of lists in the addressing mechanisms are dramatically shortened. The "address field" will also be shorter.

"Redundancy Domain" means a specified number of processors on which code for one and the same application subfunction is loaded, such that the subfunction in question may be executed on all processors in the Redundancy Domain. The number of processors within the Domain may be changed during runtime. The "redundancy" resides in the fact that the system will continue to function even if a processor is crashed or blocked.

"Load" means the relative utilization of each processor in the system at any given time.

"Load imbalance" means a deviation from a desired load that may trigger a reconfiguration. Thus, minor imbalances within predefined limits are tolerated.

"Application" means something executing on a distributed computer system, e.g. telecommunications system. Examples of "Applications" are telephone calling systems, ISDN.

"Application Subfunction" means elementary or basic processes together forming an "Application" (e.g. "off-hook" and "call access" functions, code receiving functions etc.). The code of each subfunction may be executed on several processors. Each processor handles different D.U.'s.

## Field of the Invention

The present invention relates in one aspect to methods for configuration and reconfiguration of software resources and of the execution of such resources, in a distributed computer system, in particular a telecommunications system. In another aspect the present invention relates to a telecommunications system having built in functionality for such configuration and reconfiguration.

## Background of the Invention

In a distributed computer system, such as a telecommunications system with an enormous number of subscribers, it is impossible to have data for all subscribers and execution and control functions for all subscribers located on one single processor, i.e. a function must have the capability to execute in parallel on several processors. Furthermore, configuration activities involve distribution of the software resources in order to use the processors as efficiently as possible. Such configuration and reconfiguration is a very complex activity in cases where it is difficult to estimate the load (capacity) used by each application resource. Thus, there exists a need for a tool to distribute them over a number of processors.

Even if it were possible to create an initial configuration of the system that could be characterised as "optimal", this condition would not last for very long because the load on the individual processors may change with time due to the application resources executing on the processors, or by loss of processors (e.g. processor crash, replacement of processors for maintenance etc).

Heretofore, in cases where a processor is lost, processes executing on said processor would be halted until the hardware has been repaired or replaced with new hardware. Such operations could take as long as several tens of minutes or even hours, which has become unacceptable in view of the requirements of today in terms of accessibility of the systems in question.

Therefore there has evolved a need for very rapid reconfiguration of such systems, such that the time during which the systems are inoperative may be brought down to the time frame of seconds or at the most a few minutes.

Also for maintenance purposes it would be advantageous if reconfiguration could be rapidly achieved and without operator intervention, especially if the problem causing the need for reconfiguration occurs at a remote location, where it may take a substantial time before an operator can intervene.

Such mechanisms for "run time adjustments" of configurations are dependent on continuous supply of information of the status of the system, in terms of e.g the load balance in the system. This information can be acquired by monitoring the system with respect to certain parameters for a longer period of time. Data from such measurements would notify the change of load of the processors over the time, e.g. that some processors most of the time are more loaded than others. Such information may be used for initiating reconfigurations in the system, either by a maintenance technician or by functionality "built in" in the system. To enable such run time reconfigurations to be made, while fulfilling the requirements concerning non-disturbance of the operation of the system, there must be powerful mechanisms in the operating system supporting such reconfiguration, and applied by the applications.

## Prior Art

US-5,165,018 discloses self-configuration of nodes in a distributed message-based operating system. Run-time configuration is achieved by node-based configuration management processes in accordance with information contained in resource definition messages.

## Summary of the Invention

The desired mechanisms, as discussed above, are provided by the method according to the invention, as defined in claim 1.

The computation of the distribution of Resources in this method is supported by the concept of "Distribution Units" (D.U.), which is conceived for the purpose of this invention. The definition of D.U. is given above under "Definitions".

An advantage of the invention is the improved handling. It becomes simpler to configure the system since the distribution of the D.U.'s is supported by the operating system. Since the OS supports load balancing in runtime the requirement of perfect initial configuration becomes less demanding. The need for acute operator action is reduced. Also since the OS supports the Redundancy Relocation at processor loss, a service person does not need to instantly visit the location.

Still another advantage of the invention is the inherent robustness, i.e. the system will be able to automatically take care of load imbalances due to certain types of anomalities, e.g. processor crash etc. The disturbance on the system is reduced, and the load distribution over remaining processors will be maintained. The built-in Redundancy Relocation reduces the time that a function is unavailable due to e.g. processor loss.

Also the cost will be reduced by virtue of the built-in load balancing, since the processor utilization thereby will be advantageously improved. It may even be possible to reduce the number of processors in the system by more efficiently distributing Resources over processors.

## Brief Description of the Drawings

In the drawings

Fig. 1 is an overview of a telecommunications switching system wherein the present invention may be implemented;

Fig. 1b is a partial view of three processors forming a Redundancy Domain;

Fig 1c shows a Scheme of Distribution of Distribution Units over a Redundancy Domain;

Fig. 2a is a flow chart showing Initial Configuration mechanism in accordance with the invention;

Fig 2b shows a Redundancy Relocation Scheme;

Fig. 3a is a flow chart showing Additional Installation/Removal of Distribution Units in accordance with the invention;

Fig 3b shows the old scheme of distribution together with the new scheme, and the operations performed in order to achieve the new scheme;

Fig. 4a is a flow chart showing (system initiated) Load Balancing in accordance with the invention;

Fig. 4b is a flow chart showing (operator initiated) load balancing in accordance with the invention;

Fig. 4c shows old and new distribution scheme and operations at load balancing;

Fig. 5a is a flow chart showing manual blocking of processor;

Fig. 5b shows the old scheme of distribution and the Redundancy Relocation Scheme plus the new scheme of distribution. Operations required for achieving the new scheme are also shown;

Fig. 6a shows automatic blocking of a processor;

Fig. 6b shows the old scheme of distribution and the Redundancy Relocation Scheme plus the new scheme of distribution. Operations required for achieving the new scheme are also shown;

Fig. 7a shows processor deblocking;

Fig. 7b shows the old and the new Scheme of Distribution. Operations required for achieving the new scheme are also shown; and

Fig. 7c shows addition of a processor.

**Detailed Description of the Invention**

The invention will now be exemplified with reference to the drawings and to some different situations wherein the inventive concept may be used. There are two basic situations, namely

A. Initial configuration (when system is started)
B. Reconfiguration (initiated by a technician or initiated by the system itself when the system has been in operation for some time)

Situation B. may in its turn apply to a number of different situations, such as

    a. Additional installation of Distribution Units
    b. Removal of Distribution Units
    c. Load balancing (manual or automatic)
    d. Manual blocking of processor
    e. Automatic blocking of a processor (processor crash)
    f. Deblocking of processor including return of processor after blocking and addition of processor

There are a couple of different cases of (re) configuration of Distribution Units that this mechanism, together with the prerequisited mechanisms, supports.
The prerequiseted mechanisms are:

- There is a name addressing mechanism in the OS having the capability to address D.U.'s.
- The OS has a "secure" data base, in which configuration data and schemes are stored. They will thus survive a processor crash. Data base is accessible from all processors.
- There is a "state transfer" mechanism for transferring data from "old" to "new" processes.

For each case of (re)configuration two schemes are computed. The first scheme, Scheme 1 for distribution of Distribution Units on the processors within the Redundancy Domain, describes how to distribute the Resources of the system, grouped as Distribution Units (as defined previously herein) over the processors in the system, taking into account parameters determining the capacity of each processor, optionally measured values of load.
The other scheme, Scheme 2, for redundancy relocation describes how the Distribution Units will be moved in case of loss of a processor because of blocking.
This scheme will outpoint for each Distribution Unit indicating to which processor it will be relocated in the case of a reconfiguration at a later stage, e.g. in situations a - f above.
Now we will deal with the basic situations with reference to an Example, and the Figures wherein the distribution of D.U.'s over the processors in a Domain is shown. Arrows show the Redundancy Scheme. Italics show the Scheme to be attained after reconfiguration.

**EXAMPLE:**

In the drawing figures, wherein i.a. flow charts of respective case and corresponding relocation scheme are shown, the suites marked with italics indicate a recalculated scheme of distribution to be attained after the reconfiguration operations have been invoked.

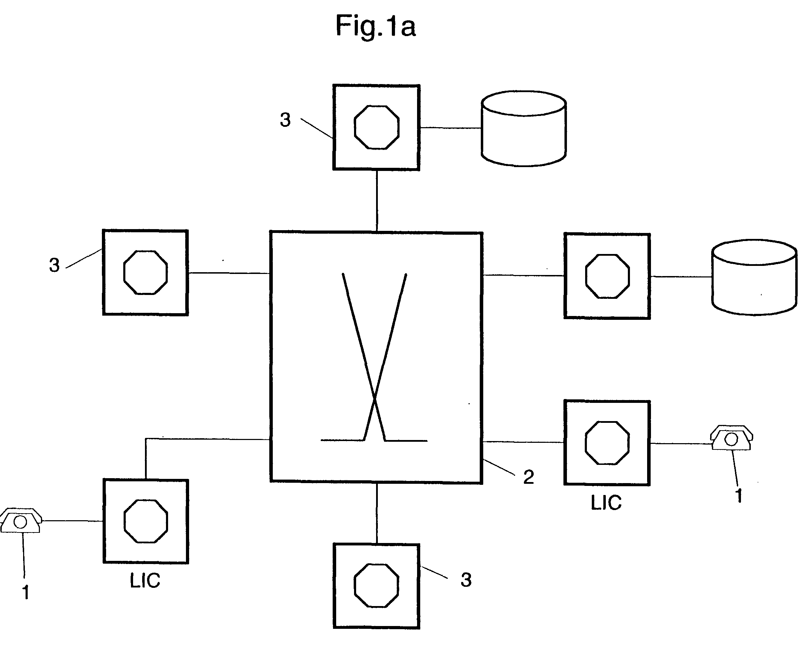

In Fig. 1a there is shown a simplified overview of a telecommunications system. It comprises several subscribers, each having at least one telephone 1. Each telephone is connected to the system via a so called LIC (Line Interface Circuit), which in its turn is connected to a switch 2 responsible for the communication between all units in the system. On all processors 3 in the system there are one or more subfunctions executing. There is also provided a data base 4 containing subscriber data etc. The data base is part of the operating system executing on the processors, and normally resides in primary memory (some of the processors may also be equipped with a disk, that may contain the data base). The disks are otherwise primarily used as loading media and for back up purposes, but may also have other functions.

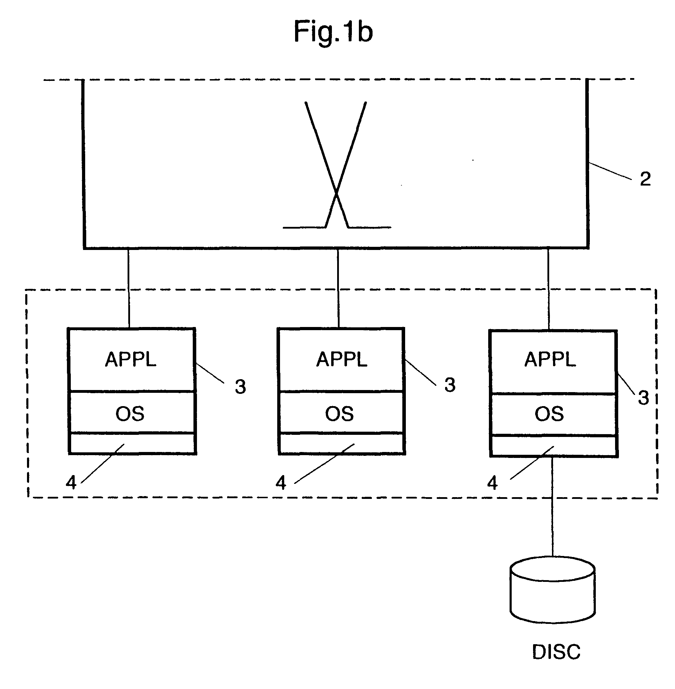

In Fig. 1b there is shown three processors 3 forming a Redundancy Domain (indicated in broken lines), as defined previously, in the system of Fig. 1a. Each processor is loaded with code for an application subfunction APPL and an operating system OS, comprising the data base.

Let us assume that this "sub"-system is to be configured with an application. An application subfunction will have 30 Distribution Units executing. They are numbered in a sequence (0-29) (a suite).

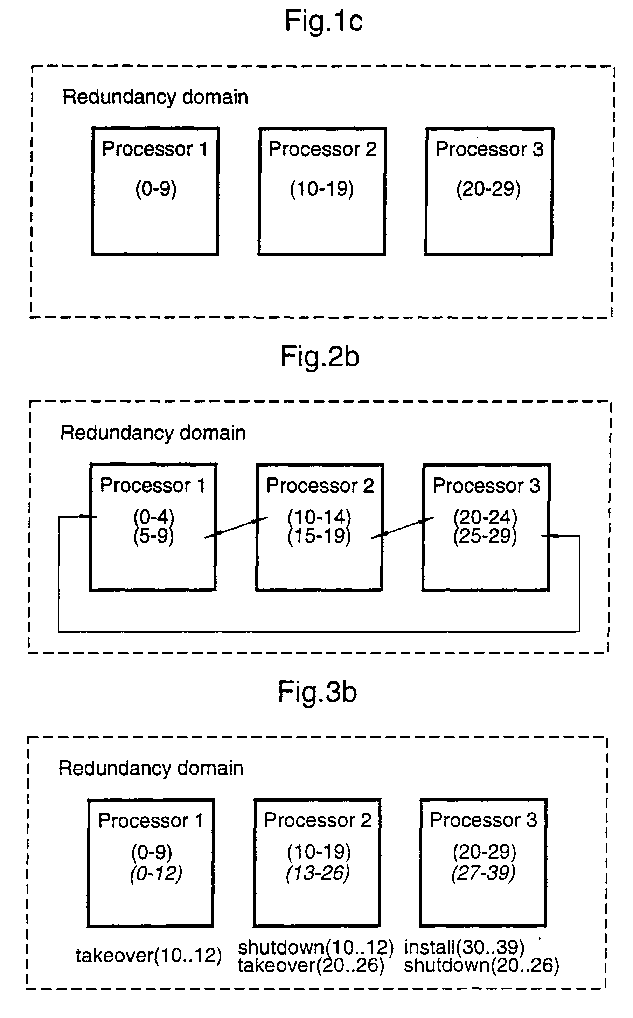

The dimensioning has resulted in a Redundancy Domain consisting of the three processors shown in Fig. 1c.

In this simplified example, we assume that the processors are all equal, and that no other applications will be executing on the processors within the Redundancy Domain, i.e. the Distribution Units will (initially) be equally distributed over the processors within the Redundancy Domain.

### A. Initial configuration

In setting up a telecommunications system it must of course be dimensioned to the expected utilization, but this is a matter of standard procedures and does not form part of the invention and will hence not be discussed here. Thus, when the dimensioning of the system is done it has to be decided how much capacity will be needed by each application subfunction that is going to execute on the system. In this process one also has to consider cases of loss of execution capacity, e. g. due to processor crashes or other losses of processors, such as removal of one processor for maintenance purposes etc. This means that it has to be determined how many processors the system should comprise.

Thereafter it has to be decided how many processors that each application will execute on, i.e. to create an initial configuration of "Redundancy Domains". Thus, for each application one determines a number of processors on which the same code will be loaded, and this group of processors constitutes a Redundancy

Domain for each application subfunction in question. A consequence of this is that all processors within each Redundancy Domain will be able to execute the application subfunction associated with this Redundancy Domain. The code of the application subfunction will thus be loaded on all processors within the domain.

When a Redundancy Domain is initially configured the Distribution Units within the application are allocated to the Redundancy Domain. It is the (re)configuration mechanism (operating according to a distribution function

$$D = f(P0...Pn, L0...Ln, DU0...x)$$

wherein P=processor, L=load, n=processor designation, DUx= the x:th Distribution Unit in a Redundancy Domain) that decides how the Distribution Units will be distributed over the processors within the domain based on the input data, such as number of processors, processor capacity, processor speed, load balance, number of Distribution Units etc.

In our example application subfunction (Fig. 1c) there has been defined 30 Distribution Units with identifiers in a sequence from 0-29. In this example they are divided into three groups (equally distributed), because there are three equal processors within the defined Redundancy Domain.

When the scheme of distribution of the Distribution Units amongst the processors (Figure 2b) is initially calculated, also the scheme of redundancy relocation of Distribution Units is calculated, so that each Distribution Unit has a redundant processor within the domain, outpointed.

The scheme is calculated in order to keep the suites of Distribution Units in a consecutive order to the greatest extent possible.

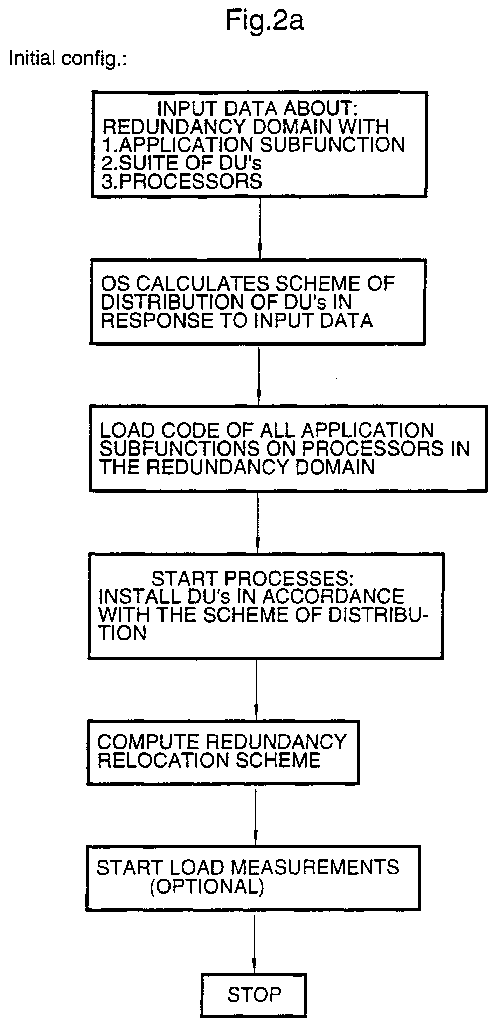

Fig. 2a shows a simple flow chart of an Initial Configuration.

In the first step, during input of data (normally data is written to a file which is then read by the O.S.), the operating system is provided with information about which application subfunction(s) the configuration is to handle; how the Redundancy Domain is defined; and the suite of Distribution Units that are to be distributed in the configuration. In response to said data, the operating system will calculate the Scheme of Distribution of DU's over the active processors in the Redundancy Domain (Fig. 1c).

Then the code for the application subfunction (s) will be loaded on the processors in the Redundancy Domain in question, and subsequently the DU's will be installed in accordance with the previously calculated Distribution Scheme, whereby the application Distribution Units are distributed over (and started on) the processors in the domain.

The computation of said Scheme of Distribution for a given application is supported by the concept of Distribution Units, defined previously. To this end a more or less complex algorithm may be used.

The simplest algorithm is to distribute the Distribution Units as equally as possible over the active processors within the Redundancy Domain. However, the algorithm may also already initially consider the memory capacity of the processor, the execution capacity of the processor, and the capacity used by other applications executing on the processors. Thus, the number of Distribution Units allocated to individual processors will be weighted in proportion to such considerations.

Finally a Redundancy Relocation Scheme is calculated.

The following figure (Figure 2b) shows how the Distribution Units allocated to a processor, will be divided into suites, that in case of blocking of a processor will be moved to the most suitable processor still in operation. The arrows in the figure indicates how DU's will be moved from a processor to another in case of processor loss.

Furthermore, the distribution algorithm preferably maintains the identities of Distribution Units allocated to a processor in sequence, such that when Distribution Units are relocated to another processor during reconfiguration, they will be relocated to maintain the identities of Distribution Units on each processor in sequence to the greatest extent possible (discussed and exemplified further below). In this way the addressing will be much more rapid, because providing sequences in the address tables yield fewer lines in the tables.

The distribution of the Distribution Units (0..29) amongst the processors, has resulted in a suite of 10 Distribution Units per processor (0..9), (10..19), (20..29). Each one of the suites (0..9), ... will be divided into two equally large parts, that will be separately moved to the two remaining processors, in case of a processor blocking.

In a case where there are inherent inequality amongst the processors, then of course the subdivision for the purpose of relocation must take this into consideration, such that perhaps twice as many Distribution Units are relocated to processor P1 than to P2 if P1 has twice the capacity of P2.

The scheme of automatic redundancy relocation will be recalculated after performance of a redundancy relocation, and after each kind of other reconfiguration affecting the distribution.

For operation and maintenance of the application subfunction, an interface is required. Such an interface will have facilities for initial installation of Distribution Units (INSTALL), removal (REMOVE) of Distribution Units, and for moving Distribution Units from one application subfunction executing on one processor to another subfunction executing on another processor. Further functions are SHUTDOWN and TAKEOVER.

Said functions are basically implemented as programs triggering certain activities, and are briefly described below.

SHUTDOWN prepares for termination and a forthcoming take over.

TAKEOVER transfers control of resource objects in an old static process to a new static process.

## B Reconfiguration cases

Reconfiguration may be made either manually by an operator or automatically by the system itself, such as when certain limit values in e.g. load are exceeded. Manual reconfiguration is extremely complex, and therefore the methods disclosed herein are implemented in the operating system.

To this end there may be continuous measurements of the load balance of the processors in the system, i.e. in order to detect whether one or more processor are more heavily loaded than others (such measurement mechanisms are available in operating systems and do not per se form part of the present invention. Therefore they will not be discussed herein). The result of the measurements are considered and then included in the calculation of a new distribution for the purpose of such reconfiguration. This calls for predefined thresholds for acceptable load, deviation from which would trigger a reconfiguration.

The activities that may be initiated by a maintenance technician in run time are the following:

· Installation of additional Distribution Units. The Distribution Units are allocated to the Redundancy Domain.

· Removal of Distribution Units. The Distribution Units are removed from a Redundancy Domain.

· Load Balancing. An operator initiated reconfiguration because of bad load balance.

· Manual blocking of a processor. A processor is by some reason taken out of service. All Distribution Units executing on this processor must be moved to other processors within the Redundancy Domain.

· Deblocking (Manual) of a processor. A processor within the Redundancy Domain is taken into service. The Distribution Units are moved in order to take the processor into service and to balance the load.

The activities initiated by the system itself are the following:

· Load Balancing. Long time measurements notifying bad load balance. Thresholds defining when an imbalance is reached are defined. The Distribution Units are moved in order to achieve a better load balance.

· Automatic blocking: Reconfiguration of Distribution Units initiated by a processor crash.

· Automatic deblocking of a processor. A processor within the Redundancy Domain is taken into service. The Distribution Units are moved in order to take the processor into service and to balance the load.

## Additional installation of Distribution Units

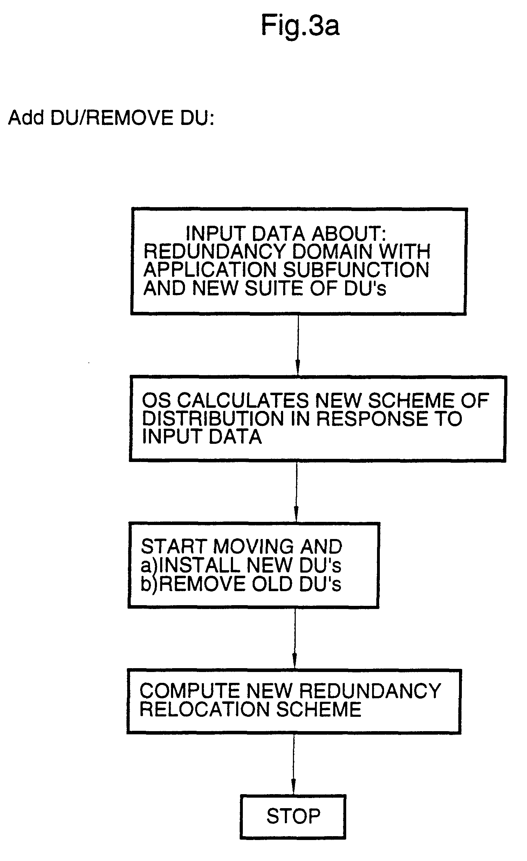

Additional Distribution Units are added to the Redundancy Domain (Fig. 3a) (an example could be an increased number of subscribers in a telecommunications system). This will cause a new scheme of distribution (and redundancy relocation). In Fig. 3b there is shown an additional installation of the Distribution Units (30-39), applied to our example.

Thus, the first thing to happen is that the system must be "informed" that 10 new Distribution Units (30-39) will be added. As previously described data is written to a file which is read by the operating system. The scheme of distribution of the Distribution Units amongst the processors within the domain will then be recalculated (0..12), (13..26), (27..29) by the operating system in response to input data. In order to attain the recalculated scheme, the additional (new) Distribution Units are INSTALLED and the other (original) Distribution Units are moved to processors according to the new Scheme of Distribution (with "SHUTDOWN" towards the "old" processes, and "TAKEOVER" against the "new" processes. In the case of removal of old DU's of course no INSTALL but REMOVE is required. When the redistribution has been carried out a new Redundancy Relocation Scheme is (automatically) calculated based on the data representing the system (number of processors, processor capacity etc).

## Load Balancing

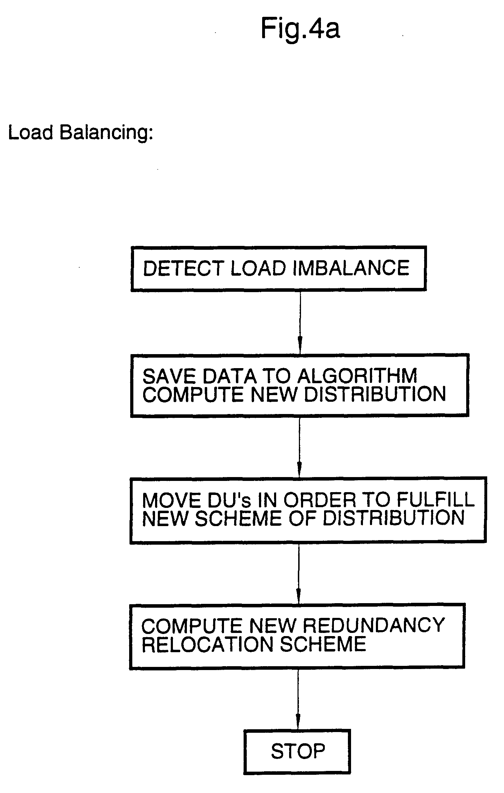

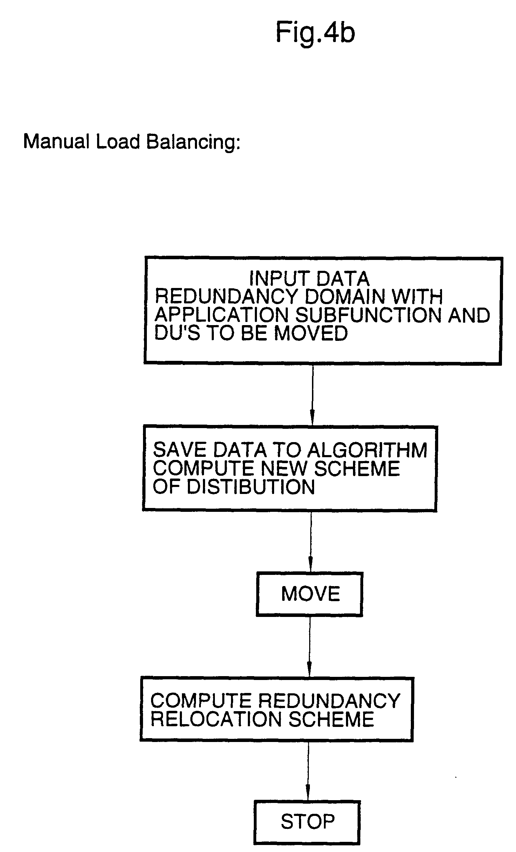

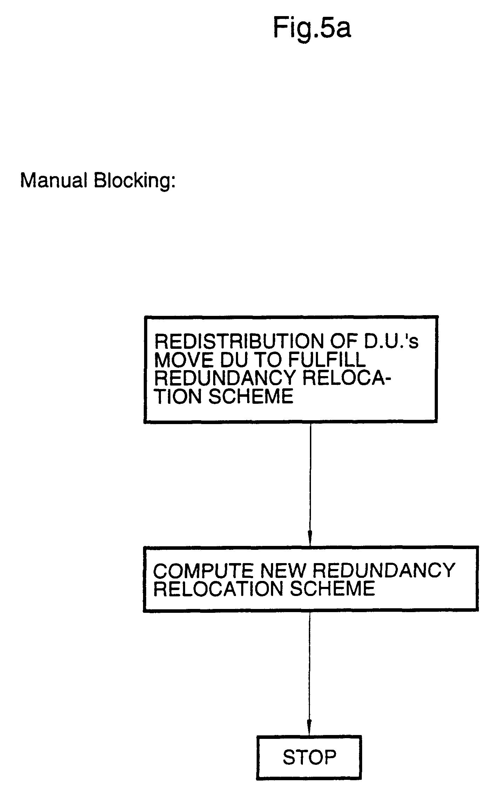

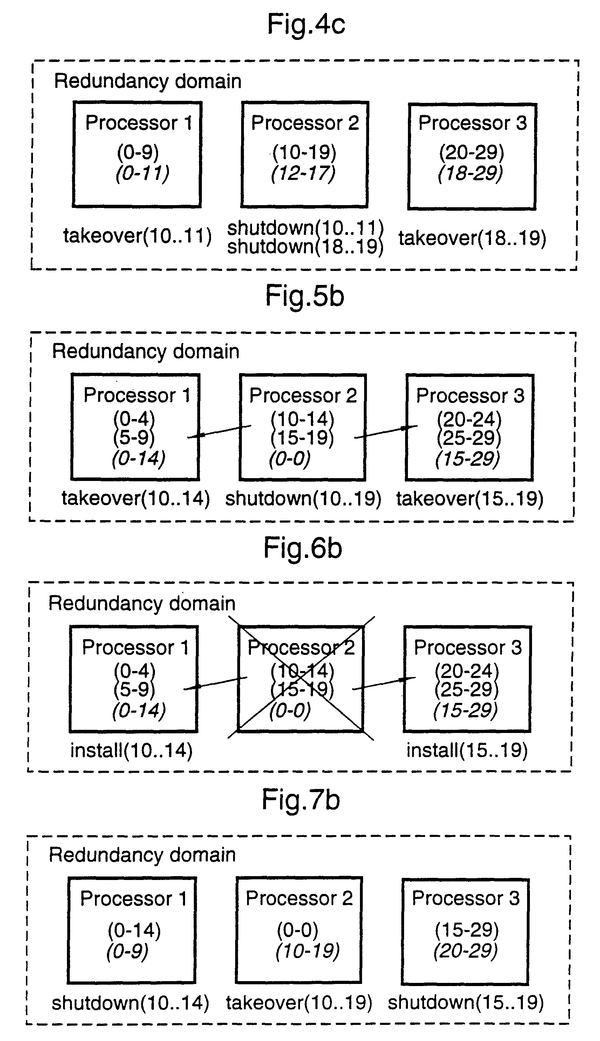

Let us assume that Processor 2 is overloaded (as an example measurements may indicate that there is a 30% overload, and the operating system is notified accordingly), so four of the allocated Distribution Units should be relocated from processor 2. The Scheme of Distribution (see Fig. 4c) of the Distribution Units amongst the processors within the domain will first be recalculated (0..11), (12..17), (18..29). Then, in order to attain the recalculated scheme the Distribution Units are moved (with "SHUTDOWN" towards the "old" process, and "TAKEOVER" against the "new" processes). When distribution is completed, a new Redundancy Relocation Scheme will be calculated.

## Manual blocking of a processor

When a processor is to be manually blocked, e.g. it is to be removed for maintenance, we want to move all the Distribution Units executing in that processor as quickly as possible. In this case the scheme for redundancy relocation calculated initially will be used. To attain the scheme for automatic redundancy relocation, the Distribution Units allocated to processor 2 are moved to processor 1 (10..14) and processor 3 (15..19) with "SHUTDOWN" towards the "old" process, and "TAKEOVER" against the "new" processes (fig. 5a and 5b).

## Automatic blocking of a processor (processor crash)

When a processor is automatically blocked, e. g. due to a processor crash, all process allocated data is lost so no state transfer between the involved processes are conceivable. Accordingly the Distribution Units allocated to the blocked processor will not be moved with "SHUTDOWN-TAKEOVER", but will be "reinstalled" in the processes taking over execution.

The operating system detects a crash by mechanisms known per se. When a crash is detected immediately the DU's allocated to the lost processor will be INSTALLED in accordance with the Redundancy Relocation Scheme calculated at Initial Configuration, or with the last updated Scheme in the case that some event has triggered a recalculation for other reasons. In a more complex situation, additionally some DU's on the still active processors may have to be moved to meet e. g. the load balance criteria.

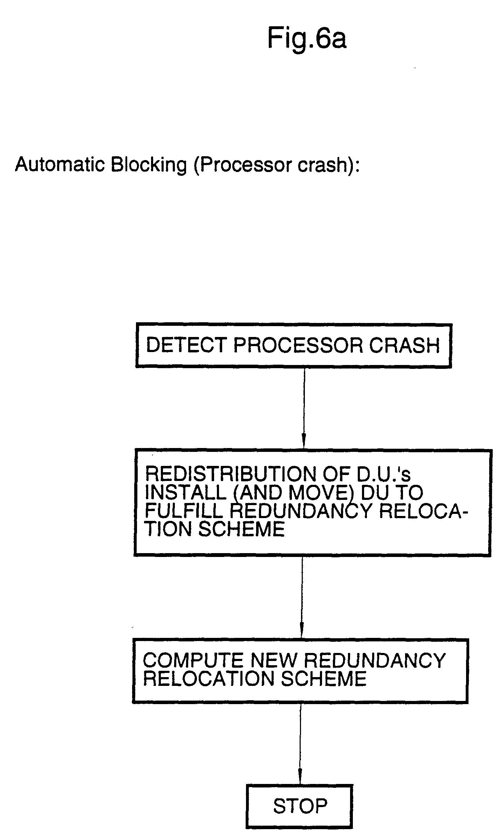

Fig. 6b shows an example of an automatic relocation of Distribution Units, caused by an automatic blocking of a processor (processor crash).

To attain the scheme for automatic redundancy relocation, the Distribution Units allocated to processor 2 are moved so as to be allocated to processor 1 (DU's 10..14) and processor 3 (DU's 15..19) with "INSTALL" against the "new" processes.

## Addition of processor

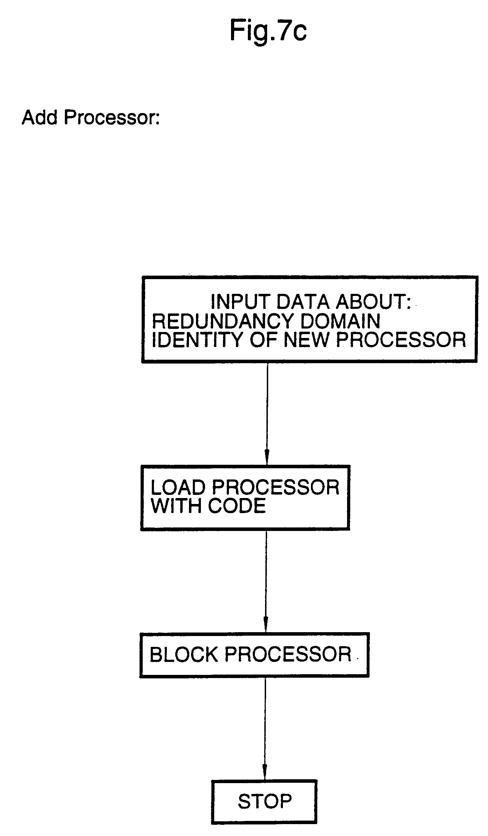

The process of adding a new processor is shown in Fig. 7c. In the first step the system must be informed similarly to the case of Initial Configuration, i. e. what application subfunctions are used, and what the Redundancy Domain is. Then the new processor is loaded with code for the application subfunctions in question, and finally the processor is blocked.

## Return of processor after blocking (deblocking) including addition of processor

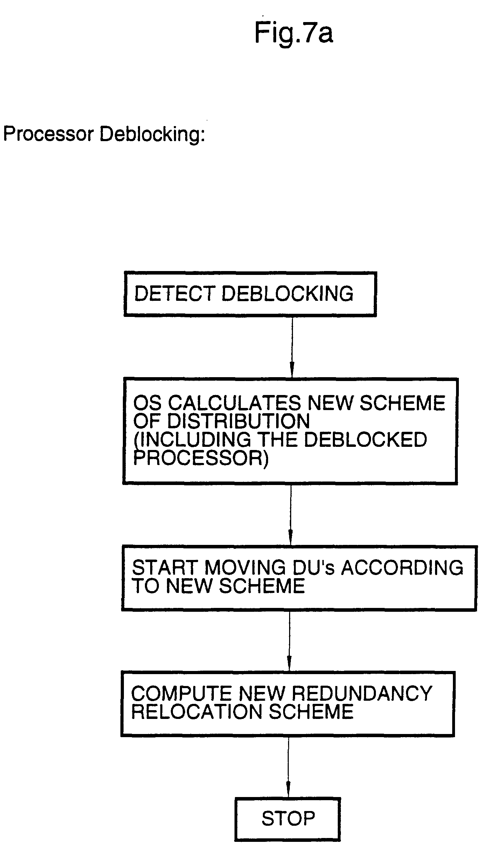

When a processor returns from blocking, the Scheme of Distribution of the Distribution Units amongst the active processors within the Redundancy Domain is recalculated. Fig 7a is a flowchart showing the sequence of steps occurring when a processor is taken into operation again after having been blocked. First the operating system detects that a processor has been added or has been reinstalled (both cases are identical from the operating systems point of view. The way detection is carried out is irrelevant, and could be effected by an operator action or by software checking the available slots whether a processor is present or not. The skilled man will appreciate that there are many ways of achieving this function. As soon as the presence of a new or reinstalled processor is detected, the operating system calculates a new Scheme of Distribution including the deblocked processor.

When the new Scheme is calculated, the system will start moving the DU's in accordance with said Scheme.

Fig. 7b shows how the Distribution Units (10..14) and (15..19), are moved between the involved processors (with "shutdown" towards the "old" process and "takeover" against the "new" processes) in order to attain the new scheme of distribution.

## Claims

1. A method of configuration of a distributed computer system, characterized by:

    a) grouping software Resources into Distribution Units,
    b) loading code for an application sub-function on several or all processors in said system, the processors on which a sub-function is executing thereby forming a Redundancy Domain,
    c) initially distributing the Distribution Units over the processors in the Redundancy Domain such that the processor load is reasonably balanced,
    d) creating a Redundancy Relocation Scheme by assigning each Distribution Unit on a processor in the Redundancy Domain a respective another processor within the Redundancy Domain, the Redundancy Relocation Scheme allowing relocation of one or more of the Distribution Units on one processor to one or more of the other processors within the same Redundancy Domain should need be in consequence of load imbalances or other malfunctions in the system.

2. The method in accordance with claim 1, characterized by initially determining how much processor capacity is required by each application sub-function executing on the system; and determining the number of processors each application sub-function must run on, said number of processors forming a Redundancy Domain.

3. The method in accordance with claim 1 characterized in that the initial distribution is made on the basis of parameters determining the capacity of each processor in the system.

4. The method in accordance with claim 3, characterized in that the initial distribution takes into account the expected load on the processors in the Redundancy Domain, the expected load optionally being based on historical data of processor load.

5. The method in accordance with claim 2, characterized by forming several Redundancy Domains within said system, each Redundancy Domain comprising a respective number of processors.

6. The method of claim 1 or 5, characterized by numbering the Distribution Units consecutively and relocating said one or more Distribution Units in such a manner that the Distribution Units as far as possible will be ordered in sequence on said one or more other processors.

7. The method in accordance with claim 1 further characterized by

    e) continuously monitoring the state of each processor during operation to detect changes in load causing load imbalance among said processors
    f) in response to a detected imbalance, calculating a new Scheme of Distribution for said Distribution Units over said processors, said calculated distribution being weighted in proportion to said change in load balance of said processors;
    g) relocating Distribution Units from a heavily loaded processor to other less loaded processors in accordance with said calculated new distribution; and
    h) transferring processing from said heavily loaded processor to said less heavily loaded processor(s).

8. The method as claimed in claim 7, characterized in that said step of relocating Distribution Units involves copying Distribution Units from said heavily loaded processor to a less loaded one while the original data is still in operation on said heavily loaded processor.

9. The method as claimed in claim 8, characterized in that said Distribution Units are numbered consecutively and originally distributed in sequence on each processor, and wherein the calculated new distribution relocates Distribution Units to other processors such that the number sequences will be continuous to the greatest extent possible.

10. The method as claimed in claim 7, characterized in that changes in processor load are only considered if they exceed predefined limits.

11. A method in accordance with claim 1 characterized in that the state of each processor is monitored during operation so as to detect changes caused by a processor loss; that all of the Distribution Units associated with a lost processor are installed on one or more of said other processors according to the Redundancy Relocation Scheme; and that a new Redundancy Relocation Scheme is calculated.

12. The method of claim 11 characterized in that the Distribution Units are evenly distributed amongst the processors in said distribution step.

13. The method of claim 11, characterized in that the number of Distribution Units associated with a processor are weigthed in said distribution step such that fewer Distribution Units are associated with processors with heavy load, or with lower inherent capacity.

14. A method in accordance with claim 1, characterized in that said initial distribution step involves:

a) calculating a scheme of distribution of Distribution Units over said processors, taking into account parameters determining the capacity of each processor, such that the calculated distribution is weighted in proportion to differences in capacity of said processors; and
b) distributing groups of Distribution Units over respective numbers of processors thus forming a corresponding number of Redundancy Domains in said system, such that the processor load is reasonably balanced, according to said scheme of distribution.

15. A method as claimed in claim 14, characterized in that the distributed computer system is a telecommunications switching system.

16. A method in accordance with claim 1 characterized by determining how much capacity is needed by each application sub-function, taking into consideration loss of capacity due to e.g. Processor crash and determining how many processors that each application sub-function will execute on.

**Patentansprüche**

1. Verfahren für eine Konfiguration eines verteilten Computersystems,
**gekennzeichnet durch**
die folgenden Schritte:

a) Gruppieren von Softwareressourcen in Verteilungseinheiten;

b) Laden eines Codes für eine Anwendungs-Subfunktion auf mehreren oder sämtlichen Prozessoren in dem System, wobei die Prozessoren, auf denen eine Subfunktion ausgeführt wird, dadurch eine Redundanzdomäne bilden;

c) anfängliches Verteilen der Verteilungseinheiten über die Prozessoren in der Redundanzdomäne derart, dass die Prozessorlast in vernünftiger Weise ausgeglichen ist;

d) Erzeugen eines Redundanzumordnungsschemas, indem jeder Verteilungseinheit auf einem Prozessor in der Redundanzdomäne ein jeweiliger anderer Prozessor innerhalb der Redundanzdomäne zugewiesen wird, wobei das Redundanzumordnungsschema eine Umordnung von einer oder mehreren der Verteilungseinheiten auf einem Prozessor an einen oder mehrere der anderen Prozessoren innerhalb der gleichen Redundanzdomäne erlaubt, sollte sich als Folge von Lastungleichgewichten oder anderen Fehlfunktionen des Systems eine Notwendigkeit ergeben.

2. Verfahren nach Anspruch 1,
**gekennzeichnet durch**
ein anfängliches Bestimmen, wieviel Prozessorkapazität von jeder Anwendungs-Subfunktion, die auf dem System ausgeführt wird, benötigt wird; und ein Bestimmen der Anzahl von Prozessoren, auf denen jede Anwendungs-Subfunktion laufen muss, wobei die Anzahl von Prozessoren eine Redundanzdomäne bilden.

3. Verfahren nach Anspruch 1,
**dadurch gekennzeichnet**,
dass die anfängliche Verteilung auf Grundlage von Parametern durchgeführt wird, die die Kapazität jedes Prozessors in dem System bestimmen.

4. Verfahren nach Anspruch 3,
**dadurch gekennzeichnet**,
dass die anfängliche Verteilung die erwartete Last auf den Prozessoren in der Redundanzdomäne berücksichtigt, wobei die erwartete Last optional auf historischen Daten der Prozessorlast basiert.

5. Verfahren nach Anspruch 2,
**gekennzeichnet durch**
ein Bilden von mehreren Redundanzdomänen innerhalb des Systems, wobei jede Redundanzdomäne eine jeweilige Anzahl von Prozessoren umfasst.

6. Verfahren nach Anspruch 1 oder 5,
**gekennzeichnet durch**
ein aufeinanderfolgendes Nummerieren der Verteilungseinheiten und ein Umordnen der einen oder mehreren Verteilungseinheiten in einer derartigen Weise, dass die Verteilungseinheiten so weit wie möglich in einer Sequenz auf dem einen oder mehreren anderen Prozessoren geordnet sein werden.

7. Verfahren nach Anspruch 1, ferner
**gekennzeichnet durch**
die folgenden Schritte:

> e) kontinuierliches Überwachen des Zustands jedes
> Prozessors während eines Betriebs, um Änderungen in der Last zu erfassen, was ein Lastungleichgewicht zwischen den Prozessoren verursacht;

> f) im Ansprechen auf ein erfasstes Ungleichgewicht, Berechnen eines neuen Verteilungsschemas für die Verteilungseinheiten über die Prozessoren, wobei die berechnete Verteilung proportional zu der Änderung des Lastgleichgewichts der Prozessoren gewichtet wird;

> g) Umordnen von Verteilungseinheiten von einem stark belasteten Prozessor an andere weniger belastete Prozessoren in Übereinstimmung mit der berechneten neuen Verteilung; und

> h) Transferieren einer Verarbeitung von dem stark belasteten Prozessor an den weniger stark belasteten Prozessor (die weniger stark belasteten Prozessoren).

8. Verfahren nach Anspruch 7,
**dadurch gekennzeichnet**,
dass der Schritt zum Umordnen von Verteilungseinheiten ein Kopieren von Verteilungseinheiten von dem stark belasteten Prozessor an einen weniger belasteten beinhaltet, während die ursprünglichen Daten noch auf dem stark belasteten Prozessor in Betrieb sind.

9. Verfahren nach Anspruch 8,
**dadurch gekennzeichnet**,
dass die Verteilungseinheiten aufeinanderfolgend nummeriert sind und ursprünglich in einer Sequenz auf jeden Prozessor verteilt sind, und wobei die berechnete neue Verteilung Verteilungseinheiten an andere Prozessoren derart umordnet, dass die Nummernsequenzen zu dem größtmöglichen Ausmaß kontinuierlich sein werden.

10. Verfahren nach Anspruch 7,
**dadurch gekennzeichnet,**
dass Änderungen in der Prozessorlast nur berücksichtigt werden, wenn sie vordefinierte Grenzen überschreiten.

11. Verfahren nach Anspruch 1,
**dadurch gekennzeichnet,**
dass der Zustand jedes Prozessors während eines Betriebs überwacht wird, um so Änderungen zu erfassen, die von einem Prozessorverlust verursacht werden; dass sämtliche Verteilungseinheiten, die einem verlorengegangenen Prozessor zugeordnet sind, auf einem oder mehreren der anderen Prozessoren in Übereinstimmung mit dem Redundanzumordnungsschema installiert werden; und dass ein neues Redundanzumordnungsschema berechnet wird.

12. Verfahren nach Anspruch 11,
**dadurch gekennzeichnet,**
dass die Verteilungseinheiten gleichmäßig unter den Prozessoren in dem Verteilungsschritt verteilt werden.

13. Verfahren nach Anspruch 11,
**dadurch gekennzeichnet,**
dass die Anzahl von Verteilungseinheiten, die einem Prozessor zugewiesen sind, in dem Verteilungsschritt so gewichtet werden, dass weniger Verteilungseinheiten Prozessoren mit einer stärkeren Last oder mit einer geringeren inhärenten Kapazität zugewiesen werden.

14. Verfahren nach Anspruch 1,
**dadurch gekennzeichnet**,
dass der anfängliche Verteilungsschritt beinhaltet:

> a) Berechnen eines Schemas einer Verteilung von Verteilungseinheiten über die Prozessoren, wobei Parameter, die die Kapazität jedes Prozessors bestimmen, berücksichtigt werden, so dass die berechnete Verteilung proportional zu Differenzen in der Kapazität der Prozessoren gewichtet wird; und

> b) Verteilen von Gruppen von Verteilungseinheiten über jeweilige Anzahlen von Prozessoren, so dass eine entsprechende Anzahl von Redundanzdomänen in dem System gebildet wird, so dass die Prozessorlast in vernünftiger Weise ausgeglichen wird, in Übereinstimmung mit dem Schema der Verteilung.

15. Verfahren nach Anspruch 14,

**dadurch gekennzeichnet,**
dass das verteilte Computersystem ein Telekommunikationsvermittlungssystem ist.

16. Verfahren nach Anspruch 1,
**gekennzeichnet durch**
ein Bestimmen, wie viel Kapazität von jeder Anwendungs-Subfunktion benötigt wird, wobei ein Verlust einer Kapazität z.B. aufgrund eines Prozessorausfalls berücksichtigt wird, und ein Bestimmen, auf wie viel Prozessoren jede Anwendungs-Subfunktion ausgeführt werden wird.

**Revendications**

1. Procédé de configuration d'un système informatique réparti, caractérisé en ce que :

   a) on groupe des Ressources de logiciel en Unités de, Distribution,
   b) on charge du code pour une sous-fonction d'application dans plusieurs processeurs, ou tous, dans le système, les processeurs dans lesquels une sous-fonction s'exécute formant ainsi un Domaine de Redondance,
   c) on distribue initialement les Unités de Distribution aux processeurs dans le Domaine de Redondance, de façon que la charge des processeurs soit raisonnablement équilibrée,
   d) on crée un Plan de Transfert de Redondance en affectant à chaque Unité de Distribution dans un processeur dans le Domaine de Redondance un autre processeur respectif à l'intérieur du Domaine de Redondance, le plan de Transfert de Redondance permettant le transfert d'une ou plusieurs des Unités de Distribution dans un processeur vers un ou plusieurs des autres processeurs à l'intérieur du même Domaine de Redondance, si cela était nécessaire à cause de déséquilibres de charge ou d'autres défauts de fonctionnement dans le système.

2. Procédé selon la revendication 1, caractérisé en ce qu'on détermine initialement quelle capacité de processeur est exigée par chaque sous-fonction d'application s'exécutant dans le système; et on détermine le nombre de processeurs dans lesquels chaque sous-fonction d'application doit s'exécuter, ce nombre de processeurs formant un Domaine de Redondance.

3. Procédé selon la revendication 1, caractérisé en ce que la distribution initiale est effectuée sur la base de paramètres déterminant la capacité de chaque processeur dans le système.

4. Procédé selon la revendication 3, caractérisé en ce que la distribution initiale tient compte de la charge prévue dans les processeurs dans le Domaine de Redondance, la charge prévue étant facultativement basée sur des données d'historique de charge des processeurs.

5. Procédé selon la revendication 2, caractérisé en ce qu'on forme plusieurs Domaines de Redondance à l'intérieur du système, chaque Domaine de Redondance comprenant un nombre respectif de processeurs.

6. Procédé selon la revendication 1 ou 5, caractérisé en ce qu'on numérote de façon consécutive les Unités de Distribution et on transfère lesdites une ou plusieurs Unités de Distribution d'une manière telle que les Unités de Distribution soient le plus possible ordonnées en séquence dans lesdits un ou plusieurs autres processeurs.

7. Procédé selon la revendication 1, caractérisé en outre en ce que

   e) on surveille continuellement l'état de chaque processeur pendant le fonctionnement pour détecter des changements de charge occasionnant un déséquilibre de charge parmi les processeurs;
   f) en réponse à un déséquilibre détecté, on calcule un nouveau Plan de Distribution pour les Unités de Distribution parmi les processeurs, la distribution calculée étant pondérée proportionnellement au changement d'équilibre de charge dans les processeurs;
   g) on transfère des Unités de Distribution à partir d'un processeur fortement chargé vers d'autres processeurs moins chargés, conformément à la nouvelle distribution calculée; et
   h) on transfère le traitement à partir des processeurs fortement chargés vers le ou les processeurs moins fortement chargés.

8. Procédé selon la revendication 7, caractérisé en ce que l'étape de transfert d'Unités de Distribution fait intervenir la copie d'Unités de Distribution à partir du processeur fortement chargé vers un processeur moins chargé pendant que les données d'origine sont encore en fonction dans le processeur fortement chargé.

9. Procédé selon la revendication 8, caractérisé en ce que les Unités de Distribution sont numérotées de façon consécutive et distribuées à l'origine en séquence dans chaque processeur, et dans lequel la nouvelle distribution calculée transfère des Unités de Distribution vers d'autres processeurs de façon que les séquences de numéros soient continues dans la plus grande mesure possible.

**10.** Procédé selon la revendication 7, caractérisé en ce que des changements dans la charge de processeurs sont considérés seulement s'ils dépassent des limites prédéfinies.

**11.** Procédé selon la revendication 1, caractérisé en ce que l'état de chaque processeur est surveillé pendant le fonctionnement, de façon à détecter des changements occasionnés par une perte de processeur; en ce que toutes les Unités de Distribution associées à un processeur perdu sont installées dans un ou plusieurs des autres processeurs, conformément au Plan de Transfert de Redondance; et en ce qu'un nouveau Plan de Transfert de Redondance est calculé.

**12.** Procédé selon la revendication 11, caractérisé en ce que les Unités de Distribution sont distribuées de manière égale parmi les processeurs dans l'étape de distribution.

**13.** Procédé selon la revendication 11, caractérisé en ce que le nombre d'Unités de Distribution associées à un processeur est pondéré dans l'étape de distribution, de façon que moins d'Unités de Distribution soient associées à des processeurs ayant une forte charge, ou ayant une plus faible capacité inhérente.

**14.** Procédé selon la revendication 1, caractérisé en ce que l'étape de distribution initiale comprend :

a) le calcul d'un plan de distribution d'Unités de Distribution aux processeurs, en tenant compte de paramètres déterminant la capacité de chaque processeur, de façon que la distribution calculée soit pondérée en proportion à des différences de capacité des processeurs; et
b) la distribution de groupes d'Unités de Distribution à des nombres respectifs de processeurs, en formant ainsi un nombre correspondant de Domaines de Redondance dans le système, de façon que la charge de processeurs soit raisonnablement équilibrée, conformément au plan de distribution.

**15.** Procédé selon la revendication 14, caractérisé en ce que le système informatique réparti est un système de commutation de télécommunications.

**16.** Procédé selon la revendication 1, caractérisé en ce qu'on détermine quelle est la capacité nécessaire pour chaque sous-fonction d'application, en prenant en considération une perte de capacité due par exemple à une défaillance de processeur, et on détermine dans combien de processeurs chaque sous-fonction d'application s'exécutera.

Fig.1a

EP 0 796 463 B1

Fig.1b

APPL

OS

3

4

APPL

OS

3

4

APPL

OS

3

4

2

DISC

14

## Fig.1c

Redundancy domain

| Processor 1 | Processor 2 | Processor 3 |
|---|---|---|
| (0-9) | (10-19) | (20-29) |

## Fig.2b

Redundancy domain

| Processor 1 | Processor 2 | Processor 3 |
|---|---|---|
| (0-4) (5-9) | (10-14) (15-19) | (20-24) (25-29) |

## Fig.3b

Redundancy domain

| Processor 1 | Processor 2 | Processor 3 |
|---|---|---|
| (0-9) (0-12) | (10-19) (13-26) | (20-29) (27-39) |

takeover(10..12)    shutdown(10..12)    install(30..39)
                    takeover(20..26)    shutdown(20..26)

# Fig.2a

Initial config.:

```
INPUT DATA ABOUT:
REDUNDANCY DOMAIN WITH
1.APPLICATION SUBFUNCTION
2.SUITE OF DU's
3.PROCESSORS
```

↓

```
OS CALCULATES SCHEME OF
DISTRIBUTION OF DU's IN
RESPONSE TO INPUT DATA
```

↓

```
LOAD CODE OF ALL APPLICATION
SUBFUNCTIONS ON PROCESSORS IN
THE REDUNDANCY DOMAIN
```

↓

```
START PROCESSES:
INSTALL DU's IN ACCORDANCE
WITH THE SCHEME OF DISTRIBU-
TION
```

↓

```
COMPUTE REDUNDANCY
RELOCATION SCHEME
```

↓

```
START LOAD MEASUREMENTS
(OPTIONAL)
```

↓

```
STOP
```

# Fig.3a

Add DU/REMOVE DU:

INPUT DATA ABOUT:
REDUNDANCY DOMAIN WITH
APPLICATION SUBFUNCTION
AND NEW SUITE OF DU's

OS CALCULATES NEW SCHEME OF
DISTRIBUTION IN RESPONSE TO
INPUT DATA

START MOVING AND
a)INSTALL NEW DU's
b)REMOVE OLD DU's

COMPUTE NEW REDUNDANCY
RELOCATION SCHEME

STOP

# Fig.4a

Load Balancing:

```
┌─────────────────────────────┐
│   DETECT LOAD IMBALANCE     │
└─────────────────────────────┘
              │
              ▼
┌─────────────────────────────┐
│   SAVE DATA TO ALGORITHM    │
│  COMPUTE NEW DISTRIBUTION   │
└─────────────────────────────┘
              │
              ▼
┌─────────────────────────────┐
│ MOVE DU's IN ORDER TO FULFILL│
│ NEW SCHEME OF DISTRIBUTION  │
└─────────────────────────────┘
              │
              ▼
┌─────────────────────────────┐
│  COMPUTE NEW REDUNDANCY     │
│    RELOCATION SCHEME        │
└─────────────────────────────┘
              │
              ▼
        ┌──────────┐
        │   STOP   │
        └──────────┘
```

# Fig.4b

Manual Load Balancing:

```
┌─────────────────────────────────────┐
│           INPUT DATA                 │
│  REDUNDANCY DOMAIN WITH              │
│  APPLICATION SUBFUNCTION AND         │
│  DU'S TO BE MOVED                    │
└─────────────────────────────────────┘
                   │
                   ▼
┌─────────────────────────────────────┐
│  SAVE DATA TO ALGORITHM             │
│  COMPUTE NEW SCHEME                  │
│  OF DISTIBUTION                      │
└─────────────────────────────────────┘
                   │
                   ▼
           ┌──────────────┐
           │     MOVE      │
           └──────────────┘
                   │
                   ▼
┌─────────────────────────────────────┐
│  COMPUTE REDUNDANCY                 │
│  RELOCATION SCHEME                   │
└─────────────────────────────────────┘
                   │
                   ▼
           ┌──────────────┐
           │     STOP      │
           └──────────────┘
```

# Fig.5a

Manual Blocking:

```
┌─────────────────────────────┐
│ REDISTRIBUTION OF D.U.'s     │
│ MOVE DU TO FULFILL           │
│ REDUNDANCY RELOCA-           │
│ TION SCHEME                  │
└─────────────────────────────┘
              │
              ▼
┌─────────────────────────────┐
│ COMPUTE NEW REDUNDANCY       │
│ RELOCATION SCHEME            │
└─────────────────────────────┘
              │
              ▼
       ┌───────────┐
       │   STOP    │
       └───────────┘
```

## Fig.4c

Redundancy domain

| Processor 1<br>(0-9)<br>*(0-11)* | Processor 2<br>(10-19)<br>*(12-17)* | Processor 3<br>(20-29)<br>*(18-29)* |

takeover(10..11)  shutdown(10..11)  takeover(18..19)
shutdown(18..19)

## Fig.5b

Redundancy domain

| Processor 1<br>(0-4)<br>(5-9)<br>*(0-14)* | Processor 2<br>(10-14)<br>(15-19)<br>*(0-0)* | Processor 3<br>(20-24)<br>(25-29)<br>*(15-29)* |

takeover(10..14)  shutdown(10..19)  takeover(15..19)

## Fig.6b

Redundancy domain

| Processor 1<br>(0-4)<br>(5-9)<br>*(0-14)* | Processor 2<br>(10-14)<br>(15-19)<br>*(0-0)* | Processor 3<br>(20-24)<br>(25-29)<br>*(15-29)* |

install(10..14)                    install(15..19)

## Fig.7b

Redundancy domain

| Processor 1<br>(0-14)<br>*(0-9)* | Processor 2<br>(0-0)<br>*(10-19)* | Processor 3<br>(15-29)<br>*(20-29)* |

shutdown(10..14)  takeover(10..19)  shutdown(15..19)

# Fig.6a

Automatic Blocking (Processor crash):

```
┌─────────────────────────────────┐
│   DETECT PROCESSOR CRASH         │
└─────────────────────────────────┘
                 │
                 ▼
┌─────────────────────────────────┐
│ REDISTRIBUTION OF D.U.'s         │
│ INSTALL (AND MOVE) DU TO         │
│ FULFILL REDUNDANCY RELOCA-       │
│ TION SCHEME                      │
└─────────────────────────────────┘
                 │
                 ▼
┌─────────────────────────────────┐
│ COMPUTE NEW REDUNDANCY           │
│ RELOCATION SCHEME                │
└─────────────────────────────────┘
                 │
                 ▼
          ┌──────────┐
          │   STOP   │
          └──────────┘
```

# Fig.7a

Processor Deblocking:

```
┌─────────────────────────┐
│   DETECT DEBLOCKING     │
└─────────────────────────┘
            │
            ▼
┌─────────────────────────┐
│ OS CALCULATES NEW SCHEME│
│ OF DISTRIBUTION         │
│ (INCLUDING THE DEBLOCKED│
│ PROCESSOR)              │
└─────────────────────────┘
            │
            ▼
┌─────────────────────────┐
│ START MOVING DU's ACCORDING│
│ TO NEW SCHEME           │
└─────────────────────────┘
            │
            ▼
┌─────────────────────────┐
│ COMPUTE NEW REDUNDANCY  │
│ RELOCATION SCHEME       │
└─────────────────────────┘
            │
            ▼
       ┌─────────┐
       │  STOP   │
       └─────────┘
```

# Fig.7c

Add Processor:

```
┌─────────────────────────────────────┐
│       INPUT DATA ABOUT:              │
│    REDUNDANCY DOMAIN                 │
│    IDENTITY OF NEW PROCESSOR         │
└─────────────────────────────────────┘
                  │
                  ▼
        ┌─────────────────────┐
        │ LOAD PROCESSOR      │
        │ WITH CODE           │
        └─────────────────────┘
                  │
                  ▼
        ┌─────────────────────┐
        │ BLOCK PROCESSOR     │
        └─────────────────────┘
                  │
                  ▼
            ┌──────────┐
            │   STOP   │
            └──────────┘
```